Europäisches Patentamt

European Patent Office

Office européen des brevets

(11) Publication number: **0 688 505 A1**

# EUROPEAN PATENT APPLICATION

(21) Application number: **95201600.4**

(22) Date of filing: **15.06.95**

(51) Int. Cl.⁶: **A23D 7/00**, A23D 9/00, C11C 1/04, C11C 3/08

(30) Priority: **24.06.94 EP 94304631**

(43) Date of publication of application:
**27.12.95 Bulletin 95/52**

(84) Designated Contracting States:
**AT BE CH DE DK ES FR GB GR IE IT LI NL PT SE**

(71) Applicant: **UNILEVER N.V.**
**P.O. Box 760**
**NL-3000 DK Rotterdam (NL)**

(84) **BE CH DE DK ES FR GR IT LI NL PT SE AT**

(71) Applicant: **UNILEVER PLC**
**Unilever House**
**Blackfriars**
**P.O. Box 68**
**London EC4P 4BO (GB)**

(84) **GB IE**

(72) Inventor: **Cain, Frederick William**
**Dr. Blookerstraat 12**
**NL-2271 VL Voorburg (NL)**
Inventor: **Moore, Stephen Raymond**
**2 Wainwright Avenue**
**Thrapston,**
**Northamptonshire, NN14 4UH (GB)**

(74) Representative: **Zweep, Robert-Jan et al**
**Unilever N.V.**
**Patent Division**
**P.O. Box 137**
**NL-3130 AC Vlaardingen (NL)**

(54) **Behenic-rich triglycerides**

(57) The invention concerns a new process for the preparation of novel fats, comprising SUS- and SSU-triglycerides high in behenic acid, wich are predominantly in $\beta^1$-crystal form. According to the process a high erucic oil is hydrolyzed to form a dierucic diglyceride, this diglyceride is hydrogenated to dibehenic diglyceride, which is converted enzymically to a reaction-mixture from which the novel fats are separated.

Rank Xerox (UK) Business Services
(3.10/3.09/3.3.4)

Although fats, rich in behenic acid, such as BOB or BBO can be made by methods disclosed in the prior art, these methods always have draw-backs which make their product less suitable for application in food products. A conventional route for preparing those fats e.g. is a chemical interesterification (using a base, such as sodium methanolate as catalyst) of a high oleic oil, such as high oleic sunflower and a hardened fat, high in behenic acid, such as hardened high erucic rapeseed oil. However, the products so obtained can only contain maximum 30 wt% behenic acid. Although this content can be increased by a fractionation, such a fractionation would also lead to an increased BBB-content, which would deteriorate the oral properties of the fat.

An alternative route nowadays is an enzymic conversion of fats or of a fat with an acid. We found, that such an enzymic conversion of a fat and an acid leads to products, wherein the triglycerides have high levels of BOB and low levels of BBO. These triglyceride mixtures crystallize readily in the $\beta$(v)-stable crystal form. This is a drawback, as these triglcyerides in general have high melting points. Further these $\beta$-stable triglycerides are not well compatible with triglycerides that are in $\beta^1$-crystalform, as is required for many food-applications, such as spreads. An enzymic process based on the conversion of fats, so e.g. hardened high erucic rapeseed oil with high oleic sunflower oil, will lead to products, that will contain mixed saturated triglycerides such as BStB, while the process further will result in a randomized product from which the composition is determined by the ratio of the starting fats.

Another disadvantage of the above processes, is the uneconomical use that is made of the fatty acids, present in the starting materials. We have studied whether we could find an improved route for the production of triglycerides, rich in behenic acid, wherein the fatty acid residues present in the starting material (e.g. high erucic rapeseed oil) are used in the most efficient way. This new route should enable us to produce triglyceride-compositions, wherein the triglcyerides are predominently in $\beta^1$-crystal form sothat they combine a high behenic content with an acceptable (or even a good) melt characteristic and are well compatible with $\beta^1$-fats in food products. The fats than will be very suitable for application in food products, e.g. as a blend with another fat or oil. It is emphasized here that high behenic contents are very advantageous, as such high contents are believed to make the fats less absorbted by the human-body and thus to make the fats lower calorie-fats.

It should be noted, that BOB-rich triglycerides, that are $\beta_2$-stable are disclosed in the Manufact. Confectioneer, November 1989, page 63. These fats are only used in chocolate based materials, because of their $\beta_2$-crystal-form.

Therefore our invention concerns both novel triglyceride-compositions that are rich in behenic acid and that upon blending with other oils or fats provide useful low calorie fat compositions and a novel process to make these triglyceride-compositions, wherein the fats comprise SUS- and SSU-type triglycerides, S being saturated fatty acid with at least 16 C-atoms; U being oleic acid or linoleic acid, wherein

- the SUS-level is at least 25 wt%
- the SSU-level is at least 15 wt%
- more than 70 wt% of the total saturated fatty acids consist of behenic acid
- the behenic acid-content of the total composition is at least 30 wt%
- while the triglycerides are predominantly in the $\beta^1$-crystal form.

In these triglycerides U preferably is oleic and/or linoleic; most preferably these $C_{18:1}$ and $C_{18:2}$ residues are present in a weight ratio between (95:5) and (5:95), preferably a weight-ratio of (2:1)-(4:1).

The SUS/SSU weight-ratio in our fats vary broadly, suitable ratio's range from 2 to 20, however, we prefer the triglycerides, wherein this ratio is 3-5, as these fats display the best melting profile and can be used to prepare products with optimal consistency and processability.

The most profitable fats are obtained, when the SUS-content of our novel triglycerides is more than 40 wt%, preferably more then 60 wt%. Simultaneously the SSU-content of our triglycerides preferably should be more than 25 wt%. The fats that fulfil the above criteria will have the highest behenic contents, while the melting properties are still good. Preferred behenic acid contents of our triglyceride-compositions are 50-80 wt%, most preferably 60-70 wt%.

In our most preferred triglycerides the saturated fatty acids consists for more than 90 wt% of behenic acid.

Our triglyceride composition can contain some limited amount of BBB, in general this amount will be between 0.5 and 15 wt%, preferably between 1 and 5 wt%.

Our fats are used in food products as blends with other fats. In most instances the fats present in these food products are in $\beta^1$-crystal form, so that our fats are well-compatible with the fats present. Very suitable blends are obtained by blending of our novel fats with other fats in weight-ratios of (10:90) to (90:10), preferably (30:70) - (70:30). Fats with an $N_{35}$ < 15, preferably < 10, most preferably < 5 (for the blend) can be obtained. The other fat can be selected from liquid oils (e.g. Sunflower oil, Palm oil, high oleic sunflower

EP 0 688 505 A1

oil, safflower oil, soybean oil, rapeseed oil, olive oil etc.), hardened liquid oils (in particular partially hardened), fractions thereof ( in particular the olein-fraction) or mixtures thereof. Our novel blends can be applied in all kind of food products, wherein a fat phase is present. Examples thereof are: margarines, spreads, confectionery coatings, in particular coatings based on non-SUS-fats, cream alternatives, etc.

Our fats can be made by an economically feasible new route. This route is based on the finding that dierucin can be made by an enzymic hydrolysis process. This process is disclosed by McNeill (see McNeill, Sonnet, 1994 Annual Meeting abstracts, page 550, C of the Annual Meeting of the American Oil Chem. Soc.). According to this abstract a dierucin can be made from high erucic rapeseed oil, wherein the dierucin-content of the end-product can be as high as 95 wt%.

So our novel process for the production of our novel triglycerides comprises the steps of:

(1) an oil is selected, that is high in erucic acid, preferably having an erucic acid content of more than 30 wt%.

(2) the oil of (1) is subjected to an enzymic hydrolysis, using an enzyme specific for the production of a diglyceride.

(3) a diglyceride, rich in dierucin is separated from the crude reaction product of (2).

(4) the dierucin is catalytically hydrogenated to dibehenic.

(5) the dibehenic is esterified enzymically in the presence of free fatty acids, rich in oleic acid and/or linoleic acid.

(6) a mixture of triglycerides with the composition according to claim 1 is separated from the crude reaction product (5).

In step (2) a lipase is applied, preferably selected from the group of Pseudomonas cepacia, Geotrichum candidum and Candida rugosa.

The separation in step (3), is preferably performed by a distillation and/or fractionation, separating a dierucin with a erucic acid content of more than 80 wt%, preferably more then 90 wt%. The catalytic hydrogenation in step (4) can be performed by conventional hydrogenation methods, applying conventional catalysts. The hardened product can be subjected to solvent fractionation. This will increase the amount of 1.3-diglycerides in the product.

The enzymic conversion of step (5) is performed by a lipase, that does not react with long chain fatty acids. An ideal lipase is Candida Rugosa.

As byproduct in step (3) liberated fatty acids are obtained. Those fatty acids can be recycled to step (5), either as such or after a purification. This recycling of these fatty acids makes our process economically attractive, as this recycling enables us to use all fatty acids originally present in the starting high erucic fat.

Although the product of the hydrolysis in step (2) is mainly a 1.3-diglyceride, we found that the end product is a mixture of BOB and BBO-triglycerides. This is unexpected, but simultaneously advantageous as well, as a mixture of the two different glycerides will display a better (= lower) melting point than the triglyceride components per se.

EXAMPLE I

1) High Erucic Acid Rape (HEAR) oil was enzymically hydrolysed to produce a diglyceride rich product:

a) 100 : 25 : 0.1 by weight HEAR oil, 0.1 M phosphate buffer solution (pH7), Candida rugosa lipase enzyme (100,000 LU/g) were stirred at 9°C for 24 hours. After the reaction, excess water was decanted off, and the product dried at 110°C.

The FAME profile (wt %) of the HEAR oil was :

| | |
|-----|------|
| 16:0 | 3.1 |
| 16:1 | 0.2 |
| 18:0 | 1.0 |
| 18:1 | 13.3 |
| 18:2 | 13.3 |
| 18:3 | 8.6 |
| 20:0 | 0.6 |
| 20:1 | 7.8 |
| 20:2 | 0.5 |
| 22:0 | 0.5 |
| 22:1 | 48.9 |
| 22:2 | 0.8 |
| 24 | 1.2 |

i.e. an erucic acid content of 48.9 wt %.

The fat phase of the hydrolysis reaction was measured to be 30.1 wt % DG and 1 wt % MG. The erucic acid content of the diglyceride was 88.2 wt % (measured by FAME analysis) and rich in C44 diglycerides (Carbon number analysis) :

| | |
|-----|------|
| 12:0 | 0.4 |
| 14:0 | 0.3 |
| 16:0 | 1.2 |
| 16:1 | 0.0 |
| 18:0 | 1.2 |
| 18:1 | 0.9 |
| 18:2 | 0.6 |
| 18:3 | 0.3 |
| 20:0 | 0.8 |
| 20:1 | 3.2 |
| 22:0 | 0.9 |
| 22:1 | 88.2 |
| 24 | 1.2 |
| C34 | 0.0 |
| C36 | 1.1 |
| C38 | 1.4 |
| C40 | 2.1 |
| C42 | 8.5 |
| C44 | 83.8 |
| C46 | 3.1 |

2) A dierucin-rich diglyceride was separated from the reaction products via a two-stage process (silica treatment and high vacuum evaporation).

a) The diglyceride content was enriched by a two stage silica treatment.

i) A silica treatment with hexane (2 : 1 : 2.8 hexane, oil, silica by weight) was performed at 40°C, followed by a wash with 7.6 parts hexane to 1 part oil (by weight). This left the silica enriched in diglycerides, which was retained.

ii) The diglyceride-enriched silica was washed to remove the diglycerides from the silica ( 3 : 1 silica to solvent by weight) with hexane/acetone (88 wt % hexane, 12 wt % acetone) as the solvent. The diglyceride-rich product was recovered by evaporation of the hexane/acetone solvent.

This diglyceride-rich product contained 51.1 wt % DG.

b) The DG-rich blend was passed through a wiped-film evaporator (240°C, 0.9 mbar abs, 400 rpm) to remove any excess FFA. This produced a blend with 73.5 wt % DG and 0.5 wt % FFA.

The DG comprised of 89.7 wt % erucic acid (from FAME analysis) :

4

| 12:0 | 0.0 |
|------|-----|
| 14:0 | 0.0 |
| 16:0 | 0.5 |
| 16:1 | 0.1 |
| 18:0 | 0.3 |
| 18:1 | 0.8 |
| 18:2 | 0.6 |
| 18:3 | 0.4 |
| 20:0 | 0.8 |
| 20:1 | 3.4 |
| 22:0 | 0.9 |
| 22:1 | 89.7 |
| 24 | 0.2 |

Analysis by carbon number showed the diglyceride to be rich in C44 :

| C34 | 0.2 |
|-----|-----|
| C36 | 1.0 |
| C38 | 1.3 |
| C40 | 2.0 |
| C42 | 8.4 |
| C44 | 84.1 |
| C46 | 3.0 |

3) The erucic-rich DG was fully hardened to produce a behenic-rich DG fat.
FAME analysis on the DG fraction of the behenic-rich fat gave the following fatty acid profile (wt%) :

| 12:0 | 0.0 |
|------|-----|
| 14:0 | 0.0 |
| 16:0 | 2.5 |
| 16:1 | 0.0 |
| 18:0 | 5.8 |
| 18:1 | 1.9 |
| 18:2 | 0.1 |
| 18:3 | 0.0 |
| 20:0 | 5.1 |
| 20:1 | 0.0 |
| 22:0 | 81.2 |
| 22:1 | 2.1 |
| 24:0 | 1.4 |

Analysis of the DG fraction by carbon number showed :

| C34 | 0.4 |
|-----|-----|
| C36 | 2.5 |
| C38 | 2.8 |
| C40 | 2.9 |
| C42 | 9.3 |
| C44 | 78.9 |
| C46 | 3.0 |

The 1,3 and 1,2 DG isomers were present in the ratio 62 :38 by weight.
4) The behenic-rich diglyceride fat was enriched by fractionation from hexane. 1 part fat was dissolved in 6 parts hexane solvent, and this was fractionated at 52 ° C. The diglyceride-rich stearin (98.8 wt % DG) was collected.

The ratio of 1,3 to 1,2 DG isomers was increased to 73 : 27 by weight.

5) The behenic-rich diglyceride was esterified with oleic acid using the following reaction method :

a) 1 part (by weight) of behenic-rich diglyceride and 0.8 parts oleic acid were dissolved in 15 parts of water-saturated hexane. 0.005 parts of immobilised lipase from Candida rugosa and an additional 0.05 parts of water added at 55°C, and the mixture stirred.

The oleic-rich acid had the following FAME profile (by weight) :

| 12:0 | 0.9 |
|------|------|
| 14:0 | 2.3 |
| 16:0 | 3.9 |
| 16:1 | 0.3 |
| 18:0 | 1.0 |
| 18:1 | 79.5 |
| 18:2 | 11.4 |
| 20 | 0.6 |
| 22 | 0.1 |

b) After 2 hours, the reaction temperature was reduced to 49°C and an additional 0.005 parts of immobilised lipase were added. The reaction was continued for a further 20 hours.

6) Excess diglycerides were separated from the reaction mixture/hexane by mixing with silica (1 : 5 original behenic-rich DG to silica by weight) and filtering. The filtrate was collected.

The filtrate was passed down an alumina column to remove excess free fatty acid, and the elutant collected. A triglyceride-rich fat (3.7 wt % DG, 0.0 % MG) was collected by evaporation of hexane from the elutant.

The final TG composition had the following fatty acid profile by FAME analysis (wt %) :

| 12:0 | 0.6 |
|------|------|
| 14:0 | 1.0 |
| 16:0 | 1.2 |
| 16:1 | 0.2 |
| 18:0 | 0.4 |
| 18:1 | 24.2 |
| 18:2 | 3.7 |
| 18:3 | 0.1 |
| 20:0 | 2.0 |
| 20:1 | 0.1 |
| 22:0 | 65.6 |
| 22:1 | 0.0 |
| 24:0 | 1.1 |

and silver phase triglyceride profile (wt %) :

| | |
|---|---|
| SSS | 13.2 |
| SOS | 29.7 |
| SSO | 46.3 |
| SLS | 4.5 |
| SSL | 4.9 |
| SOO | 0.5 |
| OSO | 1.0 |
| SOL | 0.0 |
| OOO | 0.0 |
| > 3-unsat. | 0.0 |

where S represent a saturated fatty acid, O is oleic acid and L is Linoleic acid.

An x-ray analysis confirmed that the fat is in the $\beta^1$-crystal form.

DSC-measurement demonstrated that the fat started melting at 36°C and was completely melted at 50°C.

Thus the fat had the following composition :

a) 34.2 wt % SUS.

b) 51.2 wt% SSU.

c) 91 wt% of the saturated fatty acids were behenic acid.

d) the total behenic acid content was 65.6 wt%.

e) the oleic acid to linoleic acid ratio was 87 : 13 by weight.

## Claims

1. Triglyceride composition, comprising SUS- and SSU-type triglycerides, S being saturated fatty acid with at least 16 C-atoms; U being oleic acid or linoleic acid, wherein
   - the SUS-level is at least 25 wt%
   - the SSU-level is at least 15 wt%
   - more than 70 wt% of the total saturated fatty acids consist of behenic acid
   - the behenic acid-content of the total composition is at least 30 wt%.
   - while the triglycerides are predominantly in the $\beta^1$-crystal form.

2. Triglyceride composition according to claim 1, wherein oleic acid ($C_{18:1}$) and linoleic acid ($C_{18:2}$) are present in a weight ratio between 95:5 to 5:95, preferably 2:1 to 4:1.

3. Triglyceride-composition according to claims 1-2, wherein

$$\text{weight-ratio } \frac{SUS}{SSU} = 2-20,$$

preferably 3-5.

4. Triglyceride composition according to claims 1-3, wherein:
   - SUS-content is more than 40 wt%, preferably more than 60 wt% most.
   - SSU-content is more than 25 wt%.

5. Triglyceride composition according to claims 1-4, wherein the behenic acid content of the composition is 50 - 80 wt% preferably 60 - 70 wt%.

6. Triglyceride composition according to claims 1-5, wherein more than 90 wt% of the saturated fatty acids are behenic acid.

7. Triglyceride composition according to claims 1-6, which composition has a BBB-content of 0.5-15 wt%, preferably 1-5 wt%.

8. Blend of triglycerides, wherein a fat with the composition according to claims 1-7 is mixed with another fat in a weight ratio of 10:90 to 90:10, preferably 30:70 to 70:30, so that the blend has an $N_{35} < 15$, preferably < 10 and most preferably < 5.

9. Blend according to claim 8, wherein the other triglyceride (fat) is selected from the group consisting of liquid oils, hardened liquid oils and fractions thereof.

10. Food products, such as margarines, spreads, confectionary coatings, cream alternatives etc., comprising a fat-phase, wherein the fat-phase comprises the triglyceride-composition of claims 1-7 or the blend of claims 8-9.

11. Process for the production of a triglyceride-composition with the composition according to claim 1, wherein:
    (1) an oil is selected, that is high in erucic acid, preferably having an erucic acid content of more than 30 wt%.
    (2) the oil of (1) is subjected to an enzymic hydrolysis, using an enzyme specific for the production of a diglyceride.
    (3) a diglyceride, rich in dierucin is separated from the crude reaction product of (2).
    (4) the dierucin is catalytically hydrogenated to dibehenic.
    (5) the dibehenic is esterified enzymically in the presence of free fatty acids, rich in oleic acid and/or linoleic acid.
    (6) a mixture of triglycerides with the composition according to claim 1 is separated from the crude reaction product (5).

12. Process according to claim 11, wherein step (2) is carried out by using a lipase selected from the group of Pseudomonas cepacia, Geotrichum candidum and Candida rugosa.

13. Process according to claim 11, wherein step (3) is performed by a distillation and/or fractionation, separating a dierucin with an erucic acid content of more than 80 wt%, preferably more then 90 wt%.

14. Process according to claim 11, wherein step (5) is performed by using a lipase, that does not react with long chain fatty acids.

15. Process according to claim 11, wherein step (3) is performed in such a way that also a fraction rich in liberated fatty acids is obtained which fraction, optionally after purification is recirculated to step (5) of the process.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 422 490 (THE PROCTER & GAMBLE COMPANY) | 1,10 | A23D7/00 |
| A | * page 20 - page 22; claims 1,2,5,6,8 * | 3-5,7-9, 11 | A23D9/00 C11C1/04 |
| | * page 5 - page 8 * | | C11C3/08 |
| X | EP-A-0 563 593 (KAO CORPORATION) * page 5, paragraph 1; claims 1,2; example 1; tables 1,2 * | 1,2,8-10 | |
| A | US-A-4 883 684 (THE PROCTER & GAMBLE COMPANY) * claims 1,2,4-7 * | 1,2,4,9, 10 | |
| Y | CHEMICAL ABSTRACTS, vol. 103, no. 25, 23 December 1985 Columbus, Ohio, US; abstract no. 213793,  'PLASTIC OIL AND FAT MATERIALS' * abstract * | 11,14,15 | |
| A | & JP-A-60053598 (KAO CORP.) | 1,5-7 | **TECHNICAL FIELDS SEARCHED (Int.Cl.6)** |
| | | | A23D |
| Y | EP-A-0 126 416 (ASAHI DENKA KOGYO KK) * page 16 - page 17; claims 1,5-10; figure 4 * | 11,14,15 | C11C |
| A | JAOCS, vol. 70, no. 4, 1993 CHAMPAIGN USA, pages 387-391, P.E. SONNET ET AL 'FATTY ACID SELECTIVITY OF LIPASES: ERUCIC ACID FROM RAPESEED OIL' | 11-15 | |
| A | PATENT ABSTRACTS OF JAPAN vol. 013 no. 290 (C-614) ,5 July 1990 & JP-A-01 085040 (FUJI OIL CO LTD) 30 March 1989, * abstract * | 1,2,5,11 | |

-/--

The present search report has been drawn up for all claims

| Place of search | Date of completion of the search | Examiner |
|---|---|---|
| THE HAGUE | 11 August 1995 | Kanbier, D |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 427 309 (UNILEVER NV)<br><br>* claims 1-6,8,9; example * | 1,2,10, 11,13-15 | |
| A | DATABASE WPI<br>Week 9136<br>Derwent Publications Ltd., London, GB;<br>AN 91-263093<br>& JP-A-03 172 151 (FUJI OIL KK) , 25 July 1991<br>* abstract * | 1,8,10 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 11 August 1995 | Kanbier, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)